(19) Europäisches Patentamt
European Patent Office
Office européen des brevets

(11) **EP 1 518 773 B1**

(12) **EUROPÄISCHE PATENTSCHRIFT**

(45) Veröffentlichungstag und Bekanntmachung des Hinweises auf die Patenterteilung:
**06.02.2008   Patentblatt 2008/06**

(51) Int Cl.:
***B60T 15/20*** *(2006.01)*          ***B60T 15/02*** *(2006.01)*

(21) Anmeldenummer: **04018426.9**

(22) Anmeldetag: **04.08.2004**

(54) **Anhängersteuerventil für Zugfahrzeug mit elektronisch geregelter Bremsanlage**

Trailer control valve for tractor with electronically controlled brake system

Valve de commande de remorque pour un tracteur avec système de freinage contrôlé électronique

(84) Benannte Vertragsstaaten:
**DE IT NL**

(30) Priorität: **24.09.2003   DE 10344779**
**27.11.2003   DE 10355311**

(43) Veröffentlichungstag der Anmeldung:
**30.03.2005   Patentblatt 2005/13**

(73) Patentinhaber: **WABCO GmbH**
**30453 Hannover (DE)**

(72) Erfinder:
• **Brehmer, Dieter**
**30629 Hannover (DE)**
• **Fuhrmann, Ingo**
**30855 Langenhagen (DE)**
• **Hämpke, Uwe**
**30827 Heere (DE)**
• **Klagge, Hans-Christian**
**30451 Hannover (DE)**

(74) Vertreter: **Schrödter, Manfred et al**
**WABCO GmbH**
**Postfach 91 12 62**
**30432 Hannover (DE)**

(56) Entgegenhaltungen:
**EP-A- 0 312 718          EP-A- 0 582 990**
**DE-A- 19 609 222**

**Beschreibung**

Die Erfindung betrifft ein zweikreisig ansteuerbares Anhängersteuerventil entsprechend dem Oberbegriff des Patentanspruchs 1; ein derartiges Anhängersteuerventil ist aus der EP 0 312 718 B1 bekannt (im weiteren mit D1 bezeichnet).

Anhängersteuerventile der Art nach der D1 sind für ein Zugfahrzeug in Form eines pneumatisch gebremsten Nutzfahrzeugs vorgesehen, das mit einer elektronisch geregelten Bremsanlage (EBS) ausgerüstet ist (EBS-Zugfahrzeug).

In einem solchen EBS-Zugfahrzeug ist ein vom Fahrer betätigter Bremswertgeber vorgesehen, der zum einen ein elektrisches Bremswert-Signal erzeugt, welches in einer EBS-Elektronik mit anderen Signalen, die z. B. die Bremskraftverteilung zwischen einzelnen Achsen oder den Beladungszustand von Achsen betreffen, ausgewertet wird, um schließlich elektrische Soll-Bremssignale für die einzelnen Radbremsen zu erzeugen und um auch ein Soll-Bremssignal für einen an das Zugfahrzeug anschließbaren Anhänger zu generieren. Dieses elektrische Anhänger-Soll-Bremssignal wird über einen elektropneumatischen Wandler, der in diesem Fall als elektrisch angesteuertes Proportionalventil (als Teilkomponente des Anhängersteuerventils selbst oder als separate, dem Anhängersteuerventil vorgeschaltete Komponente) ausgebildet ist, in einen ersten Steuerdruck (EBS-Steuerdruck) umgewandelt, und dieser EBS-Steuerdruck wird in die erste Steuerkammer (dort 26, Fig. 1) des Anhängersteuerventils nach der D1 eingespeist.

Zum anderen erzeugt der Bremswertgeber mit pneumatischen Mitteln einen für einen elektronischen Ausfall vorgesehenen Redundanz-Steuerdruck, der in die zweite Steuerkammer (dort 3) des Zweileitungs-Anhängersteuerventils nach der D1 eingespeist wird. Der in der ersten Steuerkammer (dort 26) vorhandene EBS-Steuerdruck wirkt erstens auf einen ersten Steuerkolben (dort 25) über dessen erste Wirkfläche (dort 27) und zweitens auf einen mit dem ersten Steuerkolben in Wirkverbindung stehenden zweiten Steuerkolben (dort 9, 2) über dessen erste Wirkfläche (dort 11, 12) ein, auf welchen andererseits über seine zweite Wirkfläche (dort 4) der Druck der zweiten Steuerkammer (dort 3) einwirkt.

Durch die Wirkverbindung beider Steuerkolben betätigen diese entweder einzeln oder gemeinsam das kombinierte Einlaß- und Auslaßventil (dort 19, 20, 21) der Arbeitskammer (dort 14), und dieser Druck wird über den Druckmittelausgang (dort 16) an den gelben Kupplungskopf "Bremsdruck" des Zugfahrzeugs zum Anschluß des Druckschlauchs "Bremsdruck" an das Anhängefahrzeug übertragen.

Das Zusammenwirken der in Reihe hintereinandergeschalteten zweiten und ersten Steuerkolben (dort 2, 9; 25) bewirkt, daß bei einem Ausfall des in die erste Steuerkammer (dort 26) eingespeisten EBS-Steuerdrucks der in die zweite Steuerkammer (dort 3) eingespeiste Redundanz-Steuerdruck wirksam wird und durch Betätigung des kombinierten Einlaß- und Auslaßventils (dort 19, 20, 21) den Druck in der Arbeitskammer (dort 14) festlegt. Dagegen wird im normalen EBS-Betrieb, bei dem in der ersten Steuerkammer der EBS-Steuerdruck anliegt, das kombinierte Einlaß- und Auslaßventil ausschließlich vom ersten Steuerkolben (dort 25) betätigt, und der Arbeitskammer-Druck wird durch den Druck in der ersten Steuerkammer (dort 26) bestimmt.

Beim EBS-Betrieb wird der in der zweiten Steuerkammer (dort 3) vorliegende Redundanz-Steuerdruck zurückgehalten: Dadurch, daß die erste Wirfläche (dort 11, 12) des zweiten Steuerkolbens (dort 9) größer ausgebildet ist als die zweite Wirkfläche (dort 4), ist der zweite Steuerkolben (dort 9) vom ersten Steuerkolben (dort 25) abgehoben und wirkt nicht mehr auf diesen ein, so daß der zweite Steuerkolben (dort 9) die Stellung des kombinierten Einlaß- und Auslaßventils nicht mehr beeinflußt.

Für die Rückhaltung des Redundanz-Steuerdrucks im EBS-Betrieb ist also das Verhältnis der ersten Wirkfläche (dort 11, 12) zur zweiten Wirkfläche (dort 4) des zweiten Steuerkolbens (dort 9, 2) maßgebend. Bei einem nach dem Prinzip der D1 aufgebauten Anhängersteuerventil Typ "480 204 000 0" der Firma WABCO beträgt dieses Wirkflächenverhältnis zur Zurückhaltung des Redundanz-Steuerdrucks ca. 2,6:1; dies bedeutet, daß der Redundanz-Steuerdruck zurückgehalten ist, solange der Redundanz-Steuerdruck nicht in etwa das 2,6-fache des EBS-Steuerdrucks übersteigt (Rückhalteverhältnis 2,6:1).

Um dieses Flächenverhältnis herzustellen, weist der zweite Steuerkolben ((9 entsprechend der D1) des Anhängersteuerventils vom Typ "480 204 000 0" einen Durchmesser von ca. 100 mm auf, woraus bereits im wesentlichen die Baugröße für das Anhängersteuerventil bestimmt ist.

Zur Verringerung der Herstellkosten soll die Baugröße eines derartigen Anhängersteuerventils reduziert werden. Eine Reduzierung der Baugröße könnte natürlich "sehr einfach" durch eine proportionale Verringerung der Proportionen aller Bauelemente erfolgen; einer solchen trivialen Lösung steht jedoch entgegen, daß sich unter Berücksichtigung sowohl der Druckbereiche als auch der üblichen Reibungs- und Hystereseeigenschaften der beteiligten Bauelemente für die Relaisventil-Teile nämlich für einen Relaisventil-Kolben ein optimaler Kolbendurchmesser ergibt, den man in wesentlichem Umfang nur unter Inkaufnahme anderer Nachteile wie z. B. der Erhöhung des Ansprechverhaltens reduzieren kann, was natürlich nicht tolerierbar ist.

Der Erfindung liegt deshalb die Aufgabe zugrunde, das aus der D1 bekannte Prinzip der Rückhaltung des Redundanz-Steuerdrucks auf der Basis von Wirkflächen-Verhältnissen eines rückhaltenden Steuerkolbens mit dem Ziel weiterzubilden, die Baugröße des Rückhalte-Steuerkolbens zu verringern.

Diese Aufgabe wird durch die im Patentanspruch 1 angegebene Erfindung gelöst; Weiterbildungen und vorteilhafte Ausführungsbeispiele der Erfindung sind in den Unteransprüchen angegeben.

Da unter Nutzung der erfindungsgemäßen Mittel die Realisierung von Rückhalte-Steuerkolben mit einem Durchmesser von z. B. 80 mm möglich ist, ist es dann auch vorteilhaft möglich, einen solchen Steuerkolben aus Kunststoff herzustellen; neben der erläuterten Verkleinerung des Kolbens an sich führt dies zu einer weiteren und zwar erheblichen Verringerung der Herstellkosten.

Die Erfindung nutzt in vorteilhafter Weise das Voreilen des elektrisch erzeugten EBS-Steuerdrucks gegenüber dem mit pneumatischen Mitteln erzeugten Redundanz-Steuerdruck aus; sobald sich aufgrund einer beginnenden Bremsung ein Druck in der unten erläuterten ersten Steuerkammer ausbildet, wird der unten erläuterte zweite Steuerkolben aus seiner Grundstellung in seine Schaltstellung versetzt, weil zu diesem Zeitpunkt noch kein Gegendruck über die Teilwirkfläche der zweiten Steuerkammer ausgebildet ist. In dieser Schaltstellung ist für den Redundanz-Steuerdruck nur noch die unten erläuterte die erste Teilkammer mit ihrer ersten Teilwirkfläche wirksam, so daß das Rückhalteverhältnis auf einen Wert von z. B. 5:1 erhöht ist.

In verschiedenen Fällen, wenn z. B. ein leeres Anhängefahrzeug ohne ALB überbremst wird, was durch Vergleich der verschiedenen Schlupfwerte feststellbar ist, reduziert das EBS-Bremsenmanagement das Anhänger-Soll-Bremssignal und damit den EBS-Steuerdruck; hier verhindert in vorteilhafter Weise das von ca. 2,6:1 auf z. B. 5:1 erhöhte Rückhalteverhältnis das Wirksamwerden des pneumatisch erzeugten und in seiner Höhe unveränderten Redundanz-Steuerdrucks.

Die Erfindung wird im folgenden anhand eines Ausführungsbeispiels, das in der Zeichnung dargestellt ist, näher erläutert.

Es zeigen:

Fig. 1   Das Anhängersteuerventil in der Grundstellung bei gelöster Bremse, bei der im we- sentlichen nur der Versorgungsdruck am Ventil anliegt;

Fig. 2   das Anhängersteuerventil bei einer Bremsung mittels eines elektrisch erzeugten Bremswert-Signals (EBS-Betrieb);

Fig. 3   das Anhängersteuerventil bei einer Bremsung im Redundanz-Betrieb;

Fig. 4   die Wirkflächen von im Anhängersteuerventil vorgesehenen Steuerkolben, die bei Druckbeaufschlagung der Steuerkolben für die auf diese einwirkenden Druckkräfte maßgeblich sind, in Perspektivdarstellung;

Fig. 5   die Ausbildung eines axialen nutförmigen Luftkanals mit Rundungen zur Vermeidung scharfer Kanten;

Fig. 6   das Anhängersteuerventil in einer Ausführungsform, bei der im Vergleich zu den vorstehenden Ausbildungen die Luftführung über eine gestufte Bohrung erfolgt;

Fig. 7   das Anhängersteuerventil mit im Vergleich zu Fig. 1 bis Fig. 3 vertauschten gehäusefesten und kolbenfesten Baueinheiten;

Fig. 8   das Anhängersteuerventil nach Fig. 7 mit der Ausbildung der Luftführung nach Fig. 6;

Fig. 9   das Anhängersteuerventil in einer Ausführungsform nach Fig. 8, bei der im Gegesatz zur dortigen Anordnung von Ventilschaltelementen an einer Zylinderinnenfläche die Ventilschaltelemente an einer Zylinderaußenfläche angeordnet sind;

Fig. 10   das Anhängersteuerventil in einer Ausführungsform mit Sitzventil-Mitteln;

Fig. 11   das Anhängersteuerventil nach Fig. 10 mit Vertauschung der gehäusefesten und der kolbenfesten Baueinheiten.

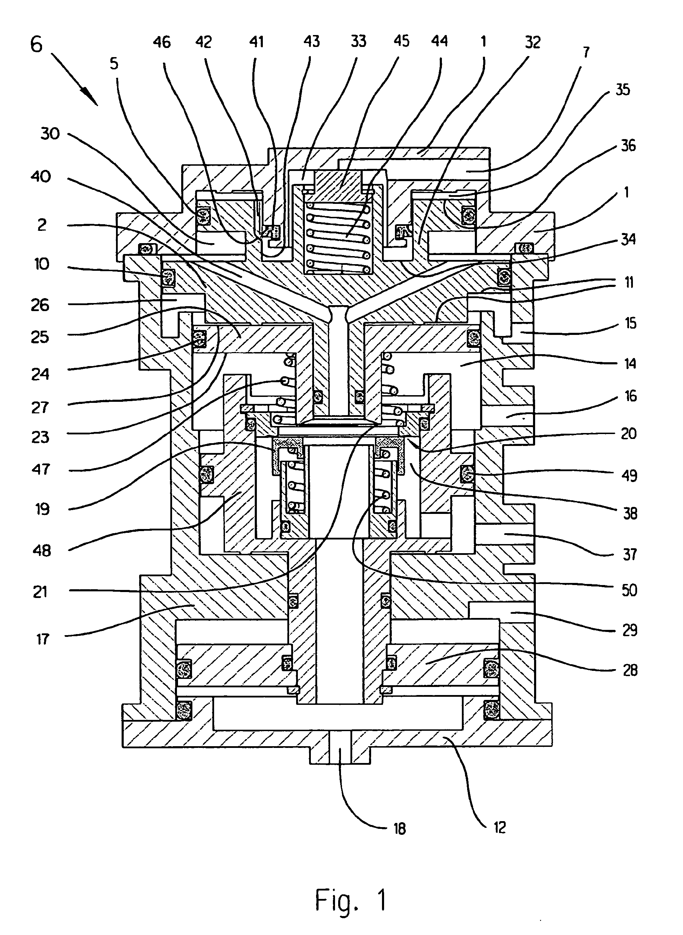

Wie eingangs erläutert, setzt die Erfindung auf dem erläuterten Wirkprinzip nach der D1 auf: Das grundsätzliche Verhalten des erfindungsgemäßen Anhängersteuerventils ist gleich zu dem in der D1 beschriebenen Verhalten. Um die gleichartigen Teile deutlich zu machen, sind diese in der Beschreibung der Erfindung weitgehend mit den gleichen Bezugzeichen aus der D1 versehen; auf die entsprechende, die dortige Fig. 1 betreffende Offenbarung in der D1 wird vollinhaltlich Bezug genommen.

Entsprechend Fig. 1 ist für das vorzugsweise, aber nicht zwingend erforderlich in einem EBS-Zugfahrzeug eingebaute, zweikreisig ansteuerbare Anhängersteuerventil (6) zur pneumatischen Ankopplung einer nicht dargestellten Zweileitungsbremse eines Anhängefahrzeugs ein erster Steuerkolben (25) vorgesehen, der eine erste zur Druckkrafterzeugung vorgesehene Wirkfläche (27) und eine zweite zur Druckkrafterzeugung vorgesehene Wirkfläche (23) aufweist, wobei die von der ersten Wirkfläche (27) bei Druckeinwirkung erzeugte Druckkraft der von der zweiten Wirkfläche (23) bei Druckeinwirkung erzeugten Druckkraft entgegengerichtet ist. Die erste Wirkfläche (27) begrenzt eine erste Steuerkammer (26), und diese Wirkfläche (27) ist mit einem ersten Steuerdruck, dem EBS-Steuerdruck, aus einem nicht dargestellten ersten Bremskreis, dem EBS-Bremskreis, über einen ersten Steueranschluß (15) beaufschlagbar.

Relativ zum ersten Steuerkolben (25) ist ein bewegbarer zweiter Steuerkolben (2) vorgesehen, der eine zur Druckkrafterzeugung vorgesehene, in Stufenform ausgebildete erste Wirkfläche (11) und eine unten erläuterte, zur Druckkrafterzeugung vorgesehene zweite Wirkfläche (34; 34, 36) aufweist, wobei die von der ersten Wirkfläche (11) bei Druckeinwirkung erzeugte Druckkraft der von der zweiten Wirkfläche (34; 34, 36) bei Druckeinwirkung erzeugten Druckkraft entgegengerichtet ist; der zweite Steuerkolben (2) kann mit dem ersten Steuerkolben (25) in Wirkverbindung gebracht werden: Per Druckkraft kann der zweite Steuerkolben (2) mit dem ersten Steuerkolben (25) zu Anlage kommen und die Druckkraft auf diesen selbst ausüben.

Die erste Wirkfläche (11) des zweiten Steuerkolbens (2) ist größer bemessen als die zweite Wirkfläche (34; 34, 36) des zweiten Steuerkolbens (2), und diese Wirkfläche (11) ist mit dem für die erste Steuerkammer (26) vorgesehenen ersten Steuerdruck (15, EBS-Steuerdruck) mit Druck zu beaufschlagen. Der zweite Steuerkolben (2) begrenzt mit seiner zweiten Wirkfläche (34; 34, 36) eine unten erläuterte zweite Steuerkammer (33; 33, 35), wobei über diese Steuerkammer die zweite Wirkfläche (34; 34, 36) mit einem zweiten Steuerdruck, dem Redundanz-Steuerdruck, aus einem nicht dargestellten zweiten, nur mit pneumatischen Mitteln arbeitenden Bremskreis, dem Redundanz-Bremskreis, über einen zweiten Steueranschluß (7) beaufschlagbar ist.

Die oben erwähnte zweite Steuerkammer ist als Kombination einer ersten Teilkammer (33) und einer zweiten Teilkammer (35) ausgebildet, wobei die erste Teilkammer (33) über eine erste Teilwirkfläche (34) und die zweite Teilkammer (35) über eine zweite Teilwirkfläche (36) auf den zweiten Steuerkolben (2) einwirken kann. Bei einer ausschließlichen Druckbeaufschlagung der ersten Teilkammer (33) wirkt nur die an der ersten Teilwirkfläche (34) erzeugte Druckkraft, und bei Druckbeaufschlagung der ersten (33) und der zweiten (35) Teilkammern wirken die an den ersten (34) und zweiten (36) Teilwirkflächen erzeugten Druckkräfte auf den zweiten Steuerkolben (2) ein.

Es ist weiter ein kombiniertes Einlaß- und Auslaßventil (19, 20, 21) vorgesehen, das zur wahlweisen Verbindung einer Arbeitskammer (14) mit einer über den Versorgungsanschluß (37) mit dem Versorgungsdruck beaufschlagten Druckmitteleinlaßkammer (38) einerseits oder mit einem Entlüftungsanschluß (18) andererseits dient. Die zweite Wirkfläche (23) des ersten Steuerkolbens (25) ist von dem Druck in der Arbeitskammer (14) beaufschlagbar, und das kombinierte Einlaß- und Auslaßventil (19, 20, 21) ist von beiden Steuerkolben (25 bzw. 2) zu betätigen; dabei betätigt der erste Steuerkolben (25) direkt das Einlaß- und Auslaßventil (19, 20, 21), während der zweite Steuerkolben (2) über die oben erläuterte Krafteinwirkung auf den ersten Steuerkolben (25) indirekt auf das Ventil einwirkt. Zur Übertragung des in der Arbeitskammer (14) ausgesteuerten Drucks an den gelben Kupplungskopf "Bremsdruck" des Zugfahrzeugs ist ein Druckmittelausgang (16) vorgesehen.

Das Anhängersteuerventil (6) ist in einem Gehäuse untergebracht, welches aus einem Gehäuseoberteil (1), einem mit diesem dichtend verbundenen Gehäuseunterteil (17) und einer mit diesem Teil dichtend verbundenen Entlüftungs-Bodenplatte (12) besteht. Das kombinierte Einlaß- und Auslaßventil (19, 20, 21) ist in einem verschieblichen Verbindungskolben (48) integriert, bei dem ein Dichtring (49) die Druckmitteleinlaßkammer (38) von der Arbeitskammer (14) abdichtet.

Durch die spezielle Formgestaltung des zweiten Steuerkolbens (2) ergibt sich zwischen dem Bereich mit der ersten Wirkfläche (11) und dem Bereich mit der zweiten Teilwirkfläche (36) ein ringförmiger Raum (30); dieser Raum ist über die im zweiten Steuerkolben (2) vorgesehenen Kanäle (40) dauerhaft mit der Entlüftung (18) verbunden, so daß durch ihn keinerlei Druckkräfte entstehen. Der ringförmige Raum (30) ist über einen Dichtring (5) gegenüber der zweiten Teilkammer (35) und über einen Dichtring (10) gegenüber der ersten Steuerkammer (26) abgedichtet.

Der erste Steuerkolben (25) ist gegenüber der ersten Steuerkammer (26) einerseits und gegenüber der Arbeitskammer (14) andererseits über einen Dichtring (24) abgedichtet.

Ein am zweiten Steueranschluß (7) anliegender Druck gelangt zunächst in die erste Teilkammer (33), und von dort aus, vorausgesetzt das Anhängersteuerventil befindet sich in der Grundstellung nach Fig. 1, über den schmalen Luftspalt zwischen einem im Gehäuseoberteil (1) fest angeordneten Nutring (41) und mindestens einem, in der inneren Zylinderfläche (43) des zweiten Steuerkolben (2) als Nut in axialer Richtung ausgebildeten Luftkanal (42) in diesen Luftkanal und in die zweite Teilkammer (35). Durch die Kombination des gehäusefesten Nutrings (41) mit einem zylindrischen Ventilkörper (32), der als von mindestens einer Längsnut unterbrochener Teilkörper des zweiten Steuerkolbens (2) mit kreiszylindrischer Innenfläche (43) ausgebildet ist, werden Ventilmittel (32, 41) zur Verbindung der zweiten Teilkammer (35) mit der ersten Teilkammer (33), bzw. zur Trennung der beiden Teikammern voneinander, gebildet. Bei diesen Ventilmitteln (32, 41) wird durch die Berührung des Nutrings (41) mit der zylindrischen Innenfläche (43) des zylindrischen Ventilkörpers (32) eine kreisförmige Dichtlinie gebildet, und für den zylindrischen Ventilkörper (32) wird bei einer Stellungsveränderung des zweiten Steuerkolbens (2) ein Betätigungshub erzeugt.

Mehrere derartige axiale nutförmige Luftkanäle (42) können längs der kreisförmigen Dichtlinie, die der Nutring bei seiner Berührung mit der kreiszylindrischen Innenfläche (43) des Ventilkörpers bildet, vorgesehen sein. Zur Erläuterung der sich im Zusammenwirken mit dem gehäusefesten Nutring (41) ergebenden Ventil-Schaltzustände ist in den Zeichnungen Fig. 1 bis Fig. 3 jeweils ein nutförmiger Luftkanal (42) in den diesen Zeichnungen entsprechenden unterschiedlichen Stellungen des zweiten Steuerkolbens (2) im Schnitt dargestellt.

Die in Fig. 1 bei Drucklosigkeit der Steueranschlüsse (15) und (7) gezeigte Grundstellung des zweiten Steuerkolbens (2) wird durch ein mit Hilfe einer starken, in ihrer maximalen Längenausdehnung durch einen Sicherungsring gefesselten Rückstellfeder (44) betätigtes Druckstück (45) bewirkt, durch welches der zweite Steuerkolben (2) gegen den mit der unten erläuterten Rückstellfeder (47) belasteten ersten Steuerkolben (25) in die gezeigte Stellung gebracht wird.

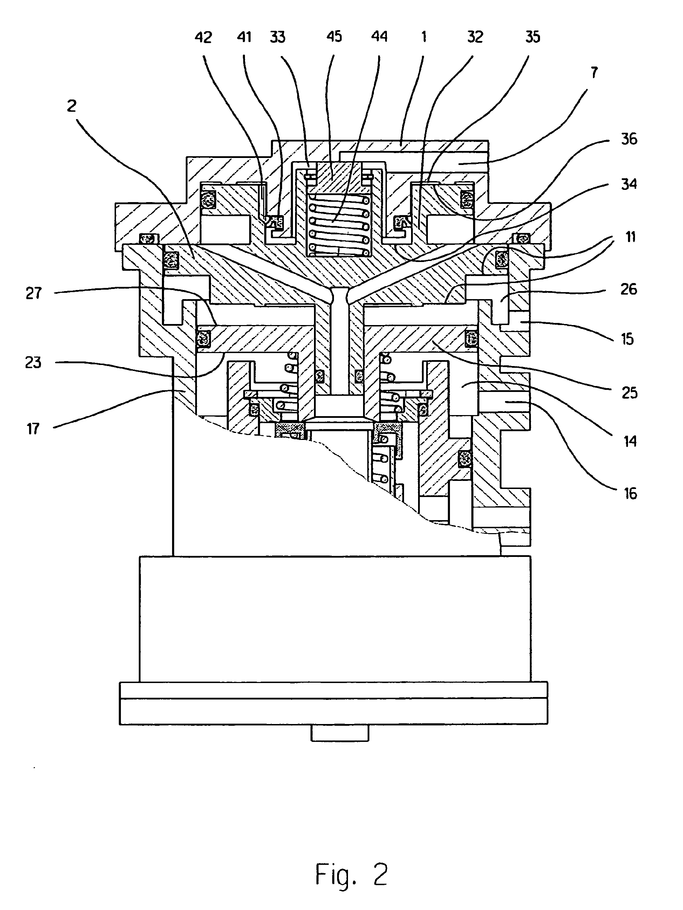

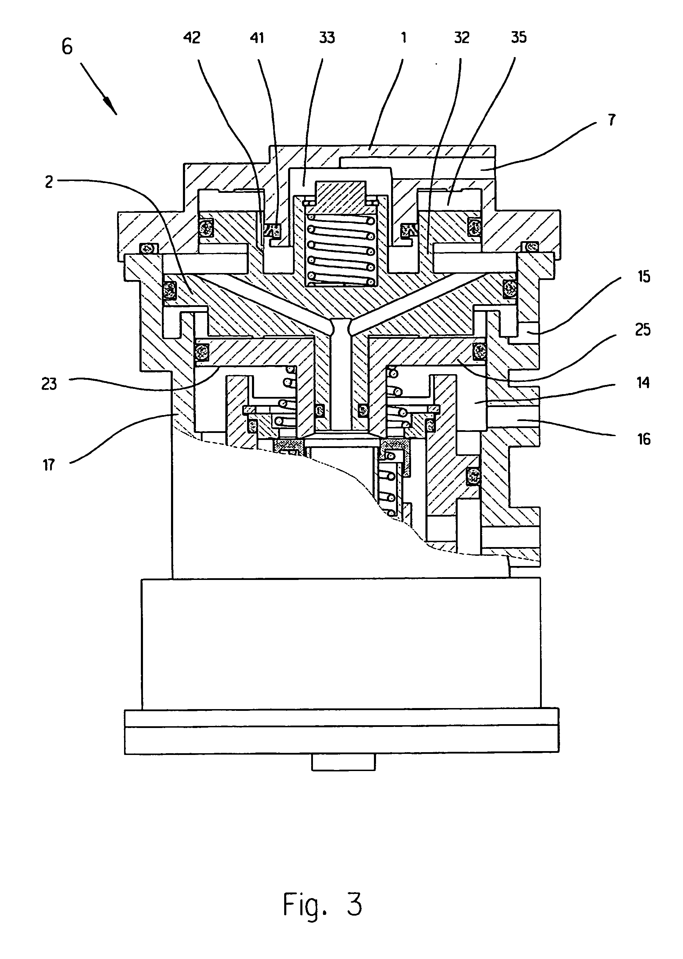

Wie erläutert, ist in dieser Grundstellung, bei der der zweite Schaltkolben (2) um einen bestimmten Betätigungsweg gegenüber dem gehäusefesten Nutring verschoben ist, das Ventil (32, 41) geöffnet; in der Stellung nach Fig. 2, bei der, wie dort erläutert, kein Betätigungsweg vorliegt, ist das Ventil (32, 41) geschlossen, und in der Stellung nach Fig. 3 mit maximalem Betätigungsweg ist das Ventil (32, 41) wiederum geöffnet. Das Ventil (32, 41) öffnet also aus seiner geschlossenen Stellung, wenn sich der zweite Steuerkolben (2) in Richtung des Gehäuseunterteils (17) verschiebt und der gehäusefeste Nutring (41) aus seiner zunächst vollständig geschlossenen Dichtlinie, die er mit der zylindrischen Fläche (43) bildet, den axialen nutförmigen Luftkanal (42) überfährt und eine Luftöffnung freigibt. Zweckmäßigerweise ist der Luftkanal, wie dargestellt, in seinem Öffnungsbereich mit einer Einlaufschräge (46) versehen, so daß der Öffnungsquerschnitt nicht sofort maximal ist, sondern weggesteuert von Null bis zu seinem Maximalwert zunimmt; damit ist der von einem Luftkanal (42) freigegebene Luftquerschnitt vom Betätigungshub des Ventils (32, 41) abhängig.

Bei geöffnetem Ventil (41, 42) wird der freigegebene Luftkanal durch die freie Kante des Nutrings (41) begrenzt, der auf seinem Weg längs der Zylinderfläche (43) den Luftkanal (42) überfährt und begrenzt; da dieses freie Nutring-Stück in diesem Zustand nicht in den Luftkanal (42) wegklappen darf, ist für die Breite eines Nut-Luftkanals (42) ein vergleichsweise kleiner Wert zu wählen. Diese Luftkanalbreite hängt natürlich von verschiedenen anderen Auslegungskriterien ab; bei einer bestimmten Auslegung ergibt sich z. B. eine optimale Luftkanalbreite von 2 mm.

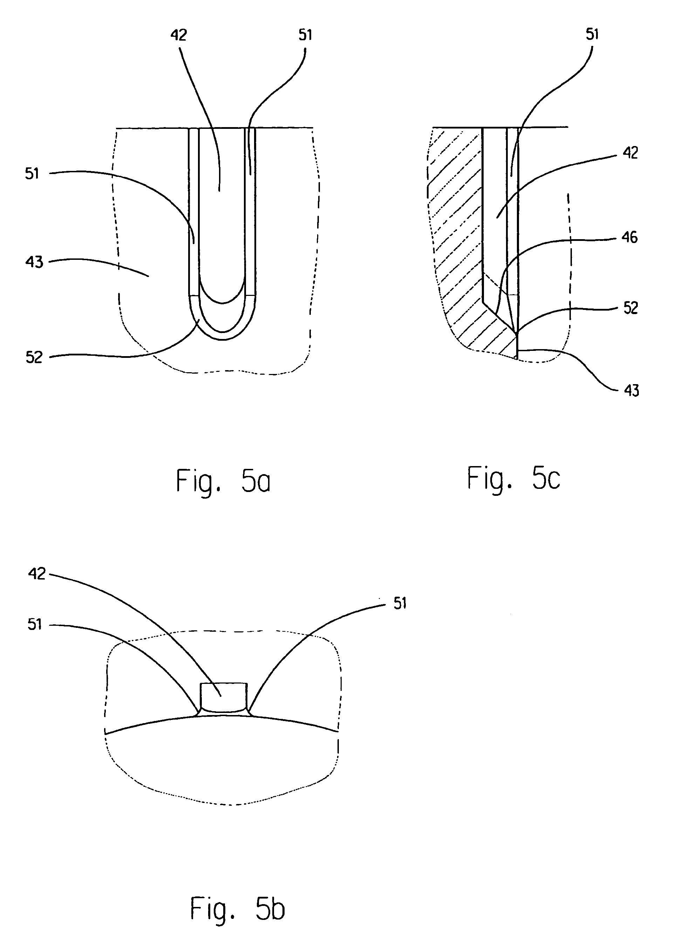

Fig. 5 zeigt die Ausbildung des nutförmigen axialen Luftkanals (42): Der Bereich dieses Luftkanals im ersten Steuerkolben (2) ist in Fig. 5a als radiale Ansicht, in Fig. 5b als axiale Draufsicht und in Fig. 5c als Seitenansicht-Schnitt dargestellt. Diese Darstellungen zeigen, daß alle vom gehäusefesten Nutring (41) zur inneren Zylinderfläche (43) des zweiten Steuerkolben (2) weisenden "Kanten" nicht rechtwinklig und damit scharf, sondern als Rundungen (51, 52) ausgeführt sind; dabei betreffen die Rundungen (51) den Übergang zwischen dem eigentlichen Luftkanal (42) und der inneren Zylinderfläche (43), und die Rundung (52) betrifft den Übergang zwischen der Einlaufschräge (46) und dieser Zylinderfläche.

Die Rundungen (51, 52) dienen zum Schutz der sehr empfindlichen freien Kante (Dichtkante) des Nutrings (41) gegen mechanische Zerstörung, wenn der Nutring, wie erläutert, beim Ventilschalten den Luftkanal (42) überfährt. Bei seiner Bewegung berührt (zur Dichtung) das erläuterte freie Nutring-Stück an seinen linken und rechten Grenzen die innere Zylinderfläche (43) über diese gerundeten Übergänge und kann nicht durch Kanten mechanisch beschädigt werden; es bleibt dauerhaft formstabil und elastisch.

In der Grundstellung nach Fig. 1 ist, wie bereits erläutert, die Arbeitskammer (14) entlüftet; hierzu ist der Auslaßventilsitz (21) gegenüber dem Ventilkörper (19) abgehoben. Die im Vergleich zur Feder (44) wesentlich schwächer ausgelegte, als Kegelfeder ausgebildete Rückstellfeder (47) ist für die Entlüftungsfunktion vorgesehen. Sie bewirkt, daß auch bei einem sehr geringen ausgesteuerten Bremsdruck in der Arbeitskammer (14) der Auslaßventilsitz (21) vom Ventikörper (19) abheben kann. Eine Ventilfeder (50) unterstützt die Schließung des Einlaßventilsitzes (20) in der Bremsabschlußstellung.

In der Art, wie in der D1 offenbart, ist der zum Anhänger übertragene Bremsdruck auch durch den im Zugfahrzeug vorgesehenen Handbremskreis steuerbar, nämlich durch entsprechende Betätigung des Handbremsventils; hierzu wird der vom Handbremsventil ausgesteuerte Druck zum Lösen der Feststellbremsen des Zugfahrzeugs am Handbrems-Steueranschluss (29) in das Anhängersteuerventil (6) eingespeist. Liegt am Handbrems-Steueranschluss (29) ein zur Lösung der Federspeicher des Zugfahrzeugs ausreichender Druck an, so zieht der Handbremskolben (28) den fest mit ihm verbundenen Verbindungskolben (48) gegen das Gehäuseunterteil (17), wo er zur Anlage kommt, wie das in Fig. 1 dargestellt ist: In dieser Stellung, d. h. im Zustand der gelösten Federspeicherbremsen, wird von Seiten des Handbremskreises kein Bremsdruck für den Anhänger ausgesteuert.

Dagegen stellt sich beim Abbau des Lösedrucks durch das Handbremsventil am Handbremsventil-Steueranschluss (29) ein reduzierter Druck ein, wodurch sich aufgrund des sich nun ändernden Druckgleichgewichtes im Anhängersteuerventil (6) der Verbindungskolben (48) in Richtung des Gehäuseoberteils (1) verschiebt, was zur Öffnung des Einlaßventilsitzes (20) führt. Dieses bleibt solange geöffnet, bis sich in der Arbeitskammer (14) ein dem anliegenden Handbremsventil-Steuerdruck entsprechender inverser Bremsdruck für den Anhänger ausgebildet hat, worauf der Einlaßventilsitz (20) wieder schließt und die Bremsenabschlussstellung erreicht ist. Auf diese Weise ist also auch über das Handbremsventil des Zugfahrzeugs ein Bremsdruck für den Anhänger feinfühlig einstellbar; die erfindungsgemäße Rückhaltung des Redundanz-Steuerdrucks wird natürlich hierdurch nicht betroffen.

In den Zeichnungen Fig. 2 und Fig. 3 sind jeweils in Teilschnitt-Darstellung nur die erfindungswesentlichen Einrichtungen des Anhängersteuerventils (6) dargestellt, da bereits in Fig. 1 die wichtigsten, für die Gesamtfunktion erforderlichen, Einheiten beschrieben sind.

Im EBS-Betrieb nach Fig. 2 liegt wie erläutert der EBS-Steuerdruck am ersten Steueranschluß (15) an, und über die durch Druckbeaufschlagung der ersten Steuerkammer (25) an der erster Wirkfläche (11) des zweiten Steuerkolbens (2) erzeugte Druckkraft wird dieser Kolben gegen die Kraft der Rückstellfeder (44) an das Gehäuseoberteil (1) auf Anschlag gefahren. Diese Anschlagstellung, bei der wie erläutert das Ventil (32, 41) geschlossen ist, ist der Ausgangspunkt für eine Ventilbetätigung durch Verschiebung des zweiten Steuerkolbens (2): Der Betätigungsweg für diese Stellung ist also Null, und aufgrund des geschlossenen Ventils (32, 41) ist die zweite Teilkammer (35) pneumatisch vom zweiten Steuerdruck (7) aus dem zweiten Bremskreis abgetrennt.

Der bei einer Bremsung wie erläutert normalerweise dem EBS-Steuerdruck nacheilende Redundanz-Steuerdruck aus dem zweiten Bremskreis befüllt daher nur die erste Teilkammer (33), so daß dieser Steuerdruck auch nur auf die erste Teilwirkfläche (34) einwirkt.

Der Redundanz-Steuerdruck wird vom EBS-Steuerdruck mit dem Verhältnis der Größe der ersten Wirkfläche (11) für den zweiten Steuerkolben (2) zur Größe der ersten Teilwirkfläche (34) der ersten Teilkammer (33) für den zweiten Steuerkolben (2) zurückgehalten:

$$\mathrm{EBS\_R\ddot{u}ckhalteverh\ddot{a}ltnis} \approx \frac{F(11)}{F(34)} \qquad [1]$$

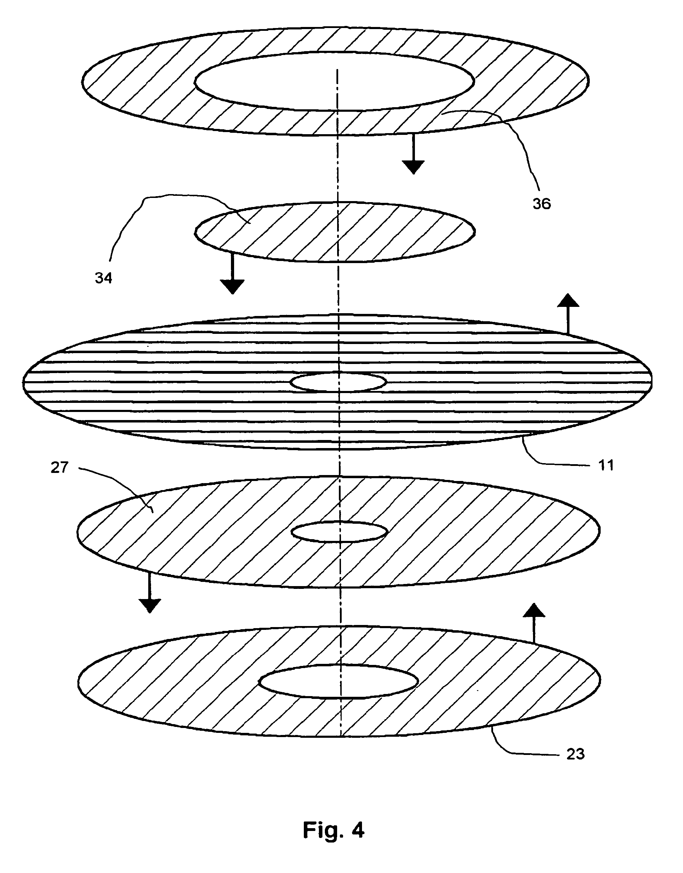

In Fig. 4 sind - zum Größenvergleich in Perspektiv-Darstellung - die Größen der ersten (34) und zweiten (36) Teilwirkflächen der Größe der ersten Wirkfläche (11) gegenübergestellt; die Wirkungsrichtungen der bei ihrer Druckbeaufschlagung erzeugten Kräfte sind durch Pfeile gekennzeichnet (Kraftangriff am jeweiligen Wirkflächenschwerpunkt).

Bei diesen für das Ausführungsbeispiel mechanischen Maßen und den daraus resultierenden Wirkflächengrößen ergibt sich:

$$\mathrm{EBS\_Druckhalteverh\ddot{a}ltnis} \approx 5 \qquad [2]$$

Zur Regelung des ausgesteuerten Drucks in der Arbeitskammer (14) ist das Verhältnis der Größe ersten Wirkfläche F (27) zur Größe der zweiten Wirkfläche F(23) des ersten Steuerkolbens (25) maßgebend; beide Wirkflächen sind nahezu gleich groß, wodurch eine gute Abstufbarkeit gewährleistet ist.

In Bezug auf den EBS-Betrieb nach Fig. 2 sei ergänzt, daß auch im "Worst-Case-Fall", bei dem der EBS-Steuerdruck dem Redundanz-Steuerdruck nicht voreilt, sondern beide Steuerdrücke gleichzeitig an den Steueranschlüssen (15 und 7) anliegen, die Rückhaltung das Redundanz-Steuerdrucks sicher wirksam wird. Bei dieser gleichzeitigen Beaufschlagung wirken - wenn man Reibungs- und Federkräfte nicht brücksichtigt - zunächst die an beiden Teilwirkflächen (34, 36) erzeugten Kräfte auf den zweiten Steuerkolben (2); das Rückhalteverhältnis ist also:

$$\mathrm{Worstcase\_R\ddot{u}ckhalteverh\ddot{a}ltnis} \approx \frac{F(11)}{F(36)+F(34)} \qquad [3]$$

Entsprechend den Wirkflächen-Größen nach Fig. 4 ist:

$$\mathrm{Worstcase\_R\ddot{u}ckhalteverh\ddot{a}ltnis} \approx 1.5 \qquad [4]$$

Bei Bremsbeginn geht der zweite Steuerkolben (2) aus seiner Grundstellung nach Fig. 1 sofort in die Stellung des EBS-Betriebs nach Fig. 2 über, wodurch das Ventil (32, 41) geschlossen wird und das große EBS_Rückhalteverhältnis nach [2] wiederhergestellt ist.

Im Redundanz-Betrieb nach Fig. 3 liegt nur am zweiten Steueranschluss (7) der Redundanz-Steuerdruck des zweiten Bremskreises an; der EBS-Steueranschluss (15) für den ersten Bremskreises ist drucklos.

Über das zunächst in der Grundstellung geöffnete Ventil (41, 32) wird neben der ersten Teilkammer (33) auch die zweite Teilkammer (35) mit dem Redundanz-Steuerdruck beaufschlagt, so daß der zweite Steuerkolben (2) zum ersten Steuerkolben (25) verschoben wird und dort anliegt. Die durch die Druckbeaufschlagung der ersten (33) und zweiten (35) Teilkammern erzeugten Kräfte wirken auf den ersten Steuerkolben (25) ein, welcher dann in der oben erläuterten Weise in der Arbeitskammer (14) den Bremsdruck für den Anhänger aussteuert.

Aus Fig. 4 ist ersichtlich, daß die für die Druckaussteuerung in der Arbeitkammer (14) beim Redundanz-Betrieb maßgebliche Summe der beiden Teilwirkflächen F(36) + F(34) des zweiten Steuerkolbens (2) fast die gleiche Größe hat wie die erste Wirkfläche F(27) des ersten Steuerkolbens (25), welche im EBS-Betriebs für die Druckaussteuerung verantwortlich ist, so daß vorteilhafterweise in beiden Betriebsfällen das Verhältnis des ausgesteuerten Drucks zum Steuerdruck praktisch gleich ist.

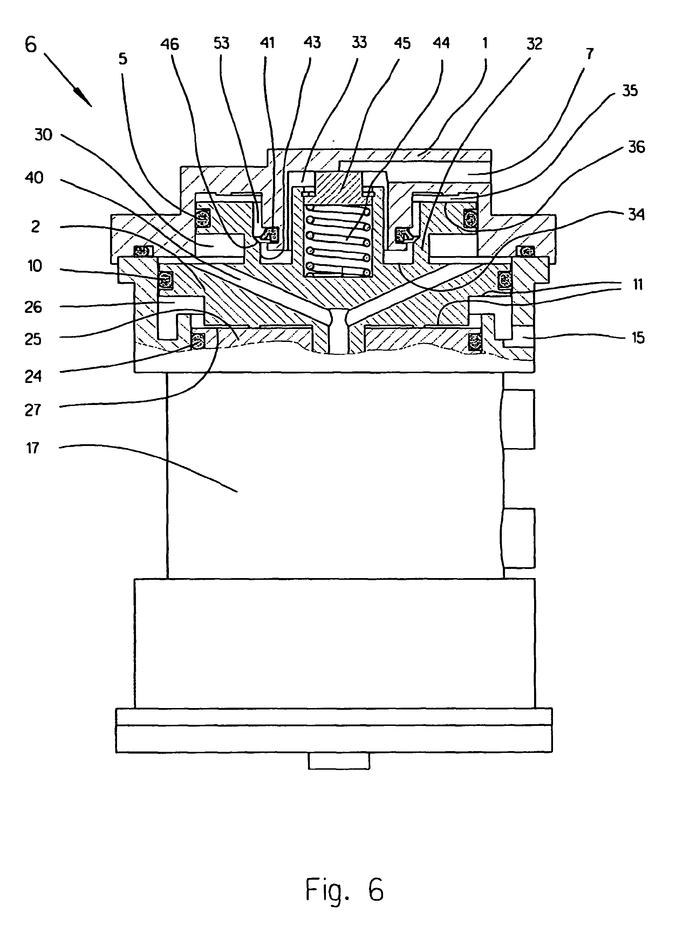

Die Darstellungen nach Fig. 6 bis Fig. 11 zeigen alternative Ausführungsformen der Ventilmittel, die, wie erläutert, in den Darstellungen Fig. 1 bis Fig. 3 als gehäusefester Nutring (41) mit mindestens einem im zylindrischen Ventilkörper (32) des zweiten Steuerkolbens (2) vorgesehenen axialen nutförmigen Luftkanal (42) ausgebildet sind. Da in Fig. 6 bis Fig. 11 nur die Ventilmittel selbst alternativ ausgestaltet sind, sind diese jeweils nur in der zu Fig. 1 entsprechenden Grundstellung dargestellt; die anderen beiden Stellungen, nämlich erstens die Stellung für den EBS-Betrieb bei geschlossenen Ventilmitteln und keinem Betätigungsweg für den zweiten Steuerkolben (2), ergibt sich, wie unter Fig. 2 erläutert, durch Anlage des EBS-Steuerdrucks am ersten Steueranschluß (15), und zweitens die Stellung für den Redundanz-Betrieb bei geöffneten Ventilmitteln und maximalem Betätigungsweg für den zweiten Steuerkolben (2), ergibt sich, wie unter Fig. 3 erläutert, wenn nur am zweiten Steueranschluß (7) der Redundanz-Steuerdruck anliegt.

In der Ausbildung der Erfindung nach Fig. 6 ist der mindestens eine nutförmige Luftkanal (42) nach Fig. 1 durch eine gestufte Bohrung (53) ersetzt, welche in den zweiten Steuerkolben (2) eingebracht wird; durch die Stufenbohrung (53) ist eine umlaufende Durchmesservergrößerung realisiert. Die Einlaufschräge (46) ist nun als umlaufende Schräge ausgebildet, so daß bei einem Betätigungshub des Ventilkörpers (32) durch die als Luftführungsmittel ausgebildete gestufte Bohrung (53) der vom gehäusefesten Nutring (41) entlang der kreisförmigen Dichtlinie freigegebene Luftquerschnitt vom Betätigungshub abhängig ist. Die Kante am Übergang zwischen der Einlaufschräge (46) und der inneren Zylinderfläche (43) ist aus den vorstehend erläuterten Gründen mit einem Radius ((52), vgl. Fig. 5) versehen.

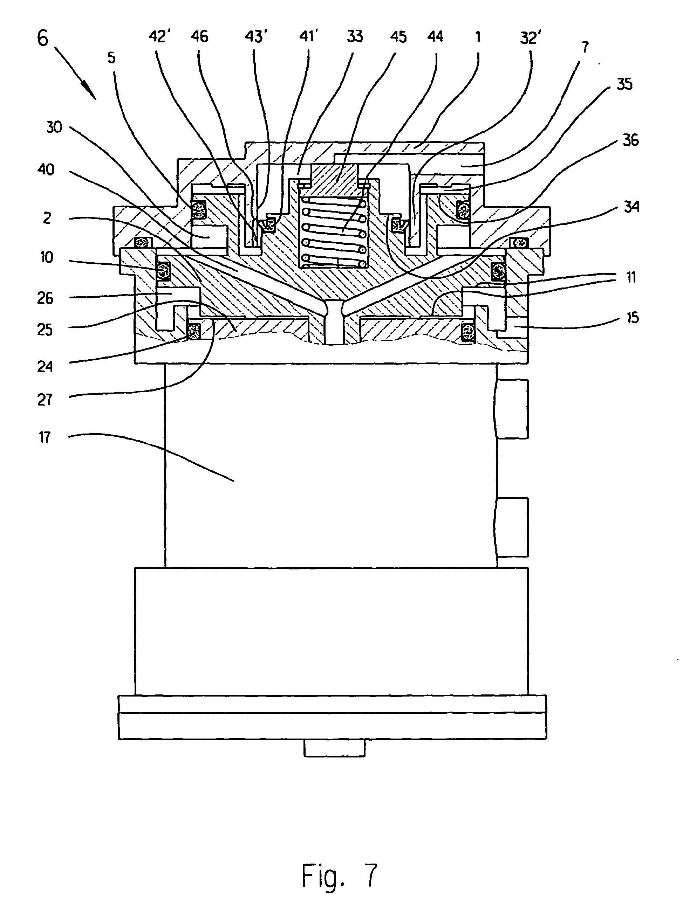

In der Ausbildungsvariante nach Fig. 7 sind die Fig. 1 entsprechenden Luftführungsmittel in Form des mindestens einen axialen nutförmigen Luftkanals (42') gehäusefest, nämlich am gehäusefesten zylindrischen Ventilkörper (32') angeordnet; die Luftführungsmittel sind in der inneren Zylinderfläche (43') des gehäusefesten Ventilkörpers (32') eingebracht. Der die Ventilmittel vervollständigende Nutring ist als kolbenfester Nutring (42') im zweiten Steuerkolben (2) angeordnet.

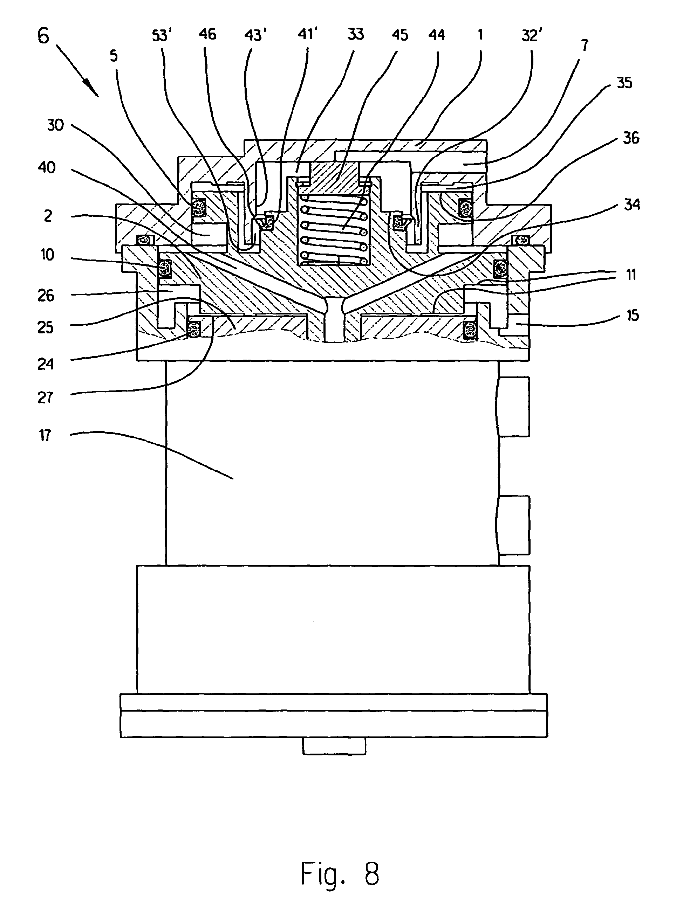

Die Ausbildung der Erfindung nach Fig. 8 zeigt entsprechend Fig. 7 die Ausbildung des Nutrings als kolbenfesten Nutring (41'); im Unterschied zu Fig. 7 ist jedoch in Fig. 8 als Luftführungsmittel eine gestufte Bohrung (53') nach der in Fig. 6 erläuterten Art vorgesehen, welche jedoch in Fig. 8 gehäusefest, d. h. in der inneren Zylinderfläche (43') des gehäusefesten zylindrischen Ventilkörpers (32') angeordnet ist.

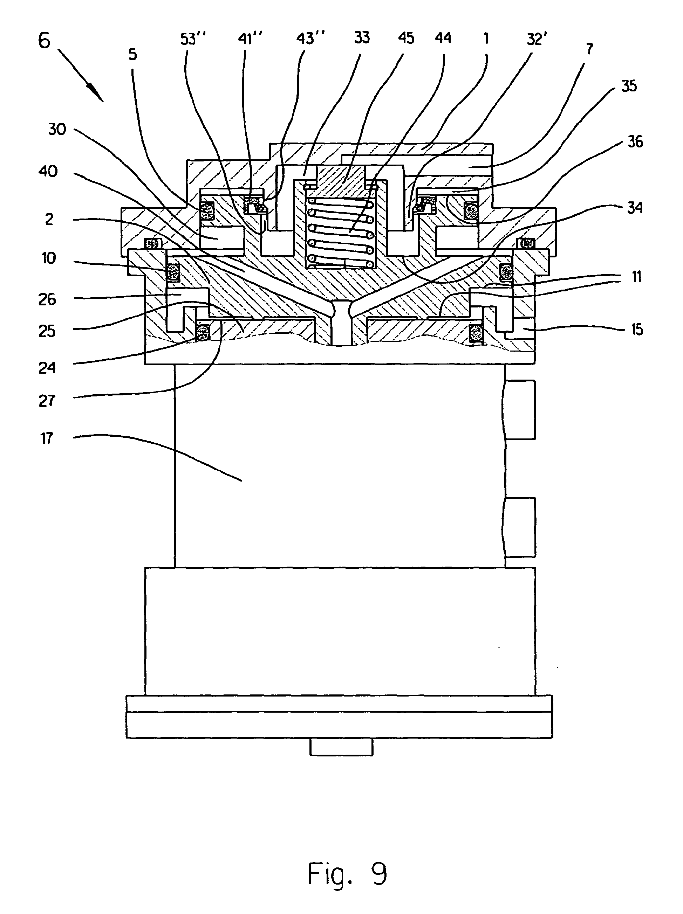

Wie in Fig. 9 dargestellt, kann eine Zylinderfläche des zylindrischen Ventilkörpers, an welcher die Luftführungsmittel eingebracht sind, im Gegensatz zu den vorstehend erläuterten Darstellungen, bei denen diese Zylinderfläche als Zylinderinnenfläche ausgebildet ist, auch als Zylinderaußenfläche ausgebildet sein. In Fig. 9 ist dies für das Beispiel eines gehäusefesten zylindrischen Ventilkörpers (32') dargestellt, in welchem wie in Fig. 8 eine gestufte Bohrung (53'') eingebracht ist, jedoch nicht wie in Fig. 8 in der Zylinderinnenfläche des Ventilkörpers, sondern in der Zylinderaußenfläche (43'') des gehäusefesten zylindrischen Ventilkörpers (32'). Der kolbenfeste Nutring (41'') bildet so mit der Zylinderaußenfläche (43''), wie vorstehend erläutert, eine kreisförmige Dichtlinie und vervollständigt die Ventilmittel.

In Zusammenfassung der radialen Steuerkanten-Ventilmittel nach Fig. 1 bis Fig. 9 beruht die Funktion der Ventilmittel auf einem radialen Dichtring einerseits und einem Ventilkörper mit an seiner Zylinderinnen- oder an seiner Zylinderaußenfläche eingebrachten Luftführungsmitteln andererseits, wobei der radiale Dichtring gleitfähig am Ventilkörper gelagert ist und mit ihm eine kreisförmige Dichtlinie bildet. Bei einem Betätigungshub des Ventilkörpers gegenüber dem radialen Dichtring wird an den Luftführungsmitteln ein vom Betätigungshub abhängiger Luftquerschnitt freigegeben. Die Luftführungsmittel können in der unterschiedlichsten Art und Weise ausgebildet sein; sowohl der radiale Dichtring als auch der Ventilkörper können kolbenfest am zweiten Steuerkolben (2) oder gehäusefest am Gehäuseoberteil (1) angeordnet sein, wobei bei einem gehäusefesten radialen Dichtring ein kolbenfester Ventilkörper und bei einem kolbenfesten radialen Dichtring ein gehäusefester Ventilkörper vorzusehen sind.

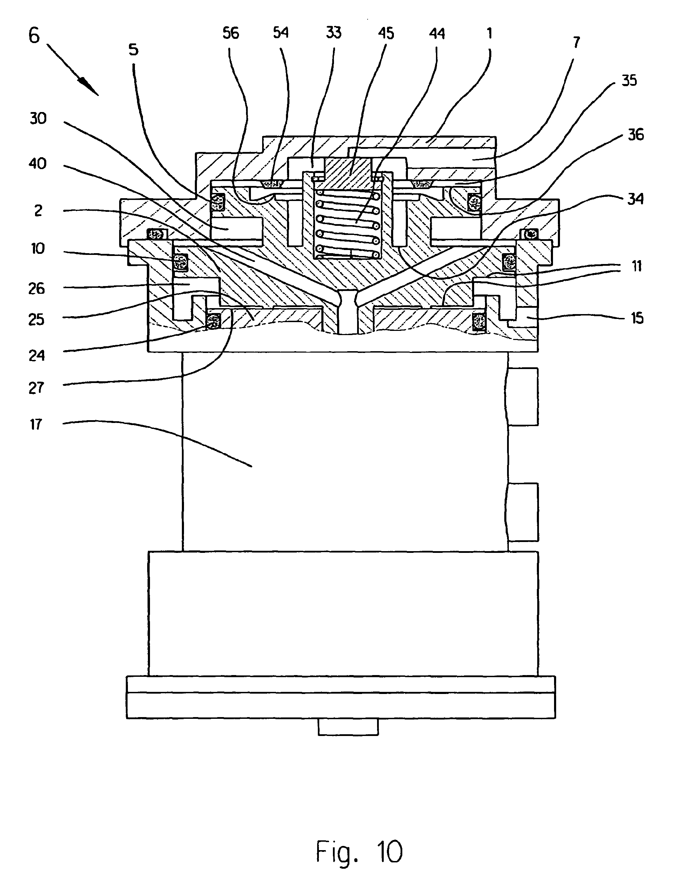

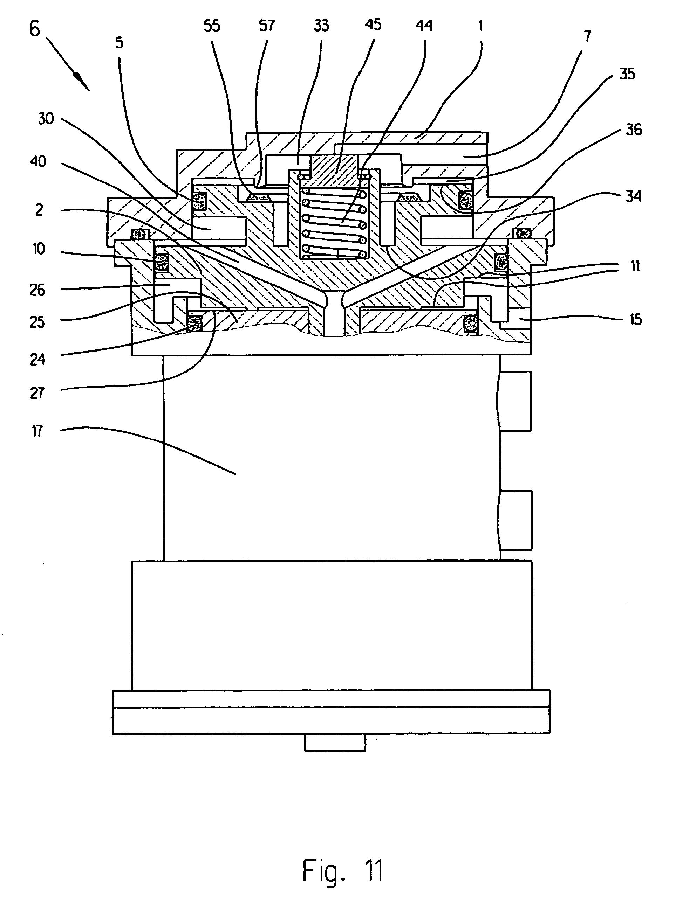

Bei den Ausbildungen der Erfindung nach Fig. 10 und Fig. 11 sind die Ventilmittel als axial wirkende Ventilmittel (54, 56; 55, 57) ausgebildet; entsprechend Fig. 10 bestehen diese Ventilmittel aus einem gehäusefesten Elastomer-Dichtelement (54) und einem im zweiten Steuerkolben (2) angeordneten Ventilsitz (56), in Fig. 11 sind die Ventilmittel dagegen als gehäusefester Ventilsitz (57) und ein im zweiten Steuerkolben (2) angeordnetes Elastomer-Dichtelement (55) ausgebildet.

**Patentansprüche**

1.  Zweikreisig ansteuerbare Bremsdruck-Steuerventileinrichtung für druckmittelbetätigte Fahrzeug-Bremsanlagen, insbesondere Anhängersteuerventil, mit folgenden Merkmalen:

    a) es ist ein erster Steuerkolben (25) vorgesehen, der eine erste druckkrafterzeugende Wirkfläche (27) und eine zweite druckkrafterzeugende Wirkfläche (23) aufweist, wobei die von der ersten Wirkfläche (27) erzeugte Druckkraft der von der zweiten Wirkfläche (23) erzeugten Druckkraft entgegengerichtet ist und die erste Wirkfläche (27) eine erste Steuerkammer (26) begrenzt;
    b) die erste Wirkfläche (27) ist von einem ersten Steuerdruck (15) aus einem ersten Bremskreis beaufschlagbar;
    c) es ist ein relativ zum ersten Steuerkolben (25) bewegbarer zweiter Steuerkolben (2) vorgesehen, der eine erste druckkrafterzeugende Wirkfläche (11) und eine zweite druckkrafterzeugende Wirkfläche (34, 36) aufweist, wobei die von der ersten Wirkfläche (11) erzeugte Druckkraft der von der zweiten Wirkfläche (34, 36) erzeugten Druckkraft entgegengerichtet ist;
    d) der zweite Steuerkolben (2) ist mit dem ersten Steuerkolben (25) in Wirkverbindung bringbar;
    e) die erste Wirkfläche (11) des zweiten Steuerkolbens (2) ist größer bemessen als die zweite Wirkfläche (34, 36) des zweiten Steuerkolbens (2);
    f) die erste Wirkfläche (11) des zweiten Steuerkolbens (2) ist mit dem ersten Steuerdruck der ersten Steuerkammer (26) beaufschlagbar;
    g) der zweite Steuerkolben (2) begrenzt mit seiner zweiten Wirkfläche (34, 36) eine zweite Steuerkammer (33, 35), wobei die zweite Wirkfläche (34, 36) von einem zweiten Steuerdruck (7) aus einem zweiten Bremskreis beaufschlagbar ist;
    h) zur wahlweisen Verbindung einer Arbeitskammer (14) mit einer Druckmitteleinlaßkammer (38) einerseits oder mit einem Entlüftungsanschluß (18) andererseits ist ein kombiniertes Einlaß- und Auslaßventil (19, 20, 21) vorgesehen;
    i) die zweite Wirkfläche (23) des ersten Steuerkolbens (25) ist von dem Druck in der Arbeitskammer (14) beaufschlagbar;
    k) das kombinierte Einlaß- und Auslaßventil (19, 20, 21) ist von beiden Steuerkolben (25 bzw. 2) betätigbar;

    **gekennzeichnet durch** die folgenden Merkmale:

    l) Die zweite Steuerkammer (33, 35) ist als Kombination einer ersten Teilkammer (33) und einer zweiten Teilkammer (35) ausgebildet, wobei der Druck in der ersten Teilkammer (33) über eine erste Teilwirkfläche (34) und der Druck in der zweiten Teilkammer (35) über eine zweite Teilwirkfläche (36) auf den zweiten Steuerkolben (2) einwirken kann;
    m) bei einer Druckbeaufschlagung der ersten Steuerkammer (26) ist nur die erste Teilwirkfläche (34) auf den zweiten Steuerkolben (2) wirksam;

2.  Bremsdruck-Steuerventileinrichtung nach Anspruch 1, **dadurch gekennzeichnet, daß** bei einer Druckbeaufschlagung der ersten Steuerkammer (26) die zweite Teilkammer (35) pneumatisch vom zweiten Steuerdruck (7) aus dem zweiten Bremskreis abgetrennt ist.

3.  Bremsdruck-Steuerventileinrichtung nach Anspruch 2, **dadurch gekennzeichnet, daß** zur Abtrennung der zweiten Teilkammer (35) vom zweiten Steuerdruck (7) Ventilmittel vorgesehen sind.

4.  Bremsdruck-Steuerventileinrichtung nach Anspruch 3, **dadurch gekennzeichnet, daß** die Ventilmittel als radiale Steuerkanten-Ventilmittel ausgebildet sind.

5.  Bremsdruck-Steuerventileinrichtung nach Anspruch 4, **dadurch gekennzeichnet, daß** die radialen Steuerkanten-Ventilmittel aus erstens einem gehäusefesten Nutring (41) und zweitens aus einem im zweiten Steuerkolben (2) angeordneten, zylindrischen Ventilkörper (32) gebildet sind.

6.  Bremsdruck-Steuerventileinrichtung nach Anspruch 5 **dadurch gekennzeichnet, daß** bei einer Stellungsveränderung des zweiten Steuerkolbens (2) aus seiner Grundstellung für den zylindrischen Ventilkörper (32, 32') ein Betätigungshub erzeugt ist.

7.  Bremsdruck-Steuerventileinrichtung nach Anspruch 6, **dadurch gekennzeichnet, daß** eine Zylinderfläche (43, 43', 43'') des zylindrischen Ventilkörpers (32, 32') mit dem Nutring (41, 41', 41") eine kreisförmige Dichtlinie bildet.

8.  Bremsdruck-Steuerventileinrichtung nach einem der Ansprüche 5 bis 7, **dadurch gekennzeichnet, daß** als Luftführungsmittel im zylindrischen Ventilkörper (32, 32') mindestens ein Luftkanal (42, 42') vorgesehen ist.

9.  Bremsdruck-Steuerventileinrichtung nach einem der Ansprüche 8, **dadurch gekennzeichnet, daß** in der durch die Drucklosigkeit der ersten Steuerkammer (26) bestimmten Grundstellung der Ventilmittel die zweite Teilkammer (35) über Luftführungsmittel (42, 42', 53, 53', 53'') mit dem zweiten Steuerdruck (7) aus dem zweiten Bremskreis verbunden ist.

10. Bremsdruck-Steuerventileinrichtung nach Anspruch 9, **dadurch gekennzeichnet, daß** die Größe eines von der kreisförmigen Dichtlinie an den Luftführungsmitteln (42, 42', 53, 53', 53'') freigegebenen Luftquerschnittes vom Betätigungshub abhängig ist.

11. Bremsdruck-Steuerventileinrichtung nach einem der Ansprüche 8 bis 10, **dadurch gekennzeichnet, daß** die Kanten am Übergang der Luftführungsmittel (42, 42',53, 53', 53' ') zur Zylinderfläche (43, 43', 43") des zylindrischen Ventilkörpers (32, 32') mit einem Radius (51, 52) versehen sind.

12. Bremsdruck-Steuerventileinrichtung nach Anspruch 7, **dadurch gekennzeichnet, daß** als Luftführungsmittel eine gestufte Bohrung (53) mit einer umlaufenden Durchmesservergrößerung vorgesehen ist.

13. Bremsdruck-Steuerventileinrichtung nach Anspruch 4, **dadurch gekennzeichnet, daß** die radialen Steuerkanten-Ventilmittel aus erstens einem mit dem zweiten Steuerkolben (2) verbundenen Nutring (41', 41'') und zweitens einem gehäusefesten zylindrischen Ventilkörper (32') gebildet sind.

14. Bremsdruck-Steuerventileinrichtung nach einem der Ansprüche 5 bis 7 oder 13, **dadurch gekennzeichnet, daß** als Luftführungsmittel eine gestufte Bohrung (53, 53', 53' ') mit einer umlaufenden Durchmesservergrößerung vorgesehen ist.

15. Bremsdruck-Steuerventileinrichtung nach Anspruch 3, **dadurch gekennzeichnet, daß** die Ventilmittel als axial wirkende Ventilmittel (54, 56; 55, 57) ausgebildet sind.

16. Bremsdruck-Steuerventileinrichtung nach Anspruch 15, **dadurch gekennzeichnet, daß** als Ventilmittel ein gehäusefestes Elastomer-Dichtelement (54) und ein im zweiten Steuerkolben (2) angeordneter Ventilsitz (56) vorgesehen sind.

17. Bremsdruck-Steuerventileinrichtung nach Anspruch 16, **dadurch gekennzeichnet, daß** als Ventilmittel ein gehäusefester Ventilsitz (57) und ein im zweiten Steuerkolben (2) angeordnetes Elastomer-Dichtelement (55) vorgesehen sind.

18. Bremsdruck-Steuerventileinrichtung nach Anspruch 4, **dadurch gekennzeichnet, daß** die Ventilmittel aus einem radialen Dichtring einerseits und einem zylindrischen Ventilkörper mit an seiner Zylinderinnen- oder an seiner Zylinderaußenfläche eingebrachten Luftführungsmitteln andererseits aufgebaut sind, wobei der radiale Dichtring gleitfähig am Ventilkörper gelagert ist und mit ihm eine kreisförmige Dichtlinie bildet.

19. Bremsdruck-Steuerventileinrichtung nach Anspruch 18, **dadurch gekennzeichnet, daß** bei einem Betätigungshub des Ventilkörpers gegenüber dem radialen Dichtring an den Luftführungsmitteln ein vom Betätigungshub abhängiger Luftquerschnitt freigegeben ist.

20. Bremsdruck-Steuerventileinrichtung nach Anspruch 18 oder 19, **dadurch gekennzeichnet, daß** sowohl der radiale Dichtring als auch der Ventilkörper kolbenfest am zweiten Steuerkolben (2) oder gehäusefest am Gehäuseoberteil (1) anordenbar sind, wobei bei einem gehäusefesten radialen Dichtring ein kolbenfester Ventilkörper und bei einem kolbenfesten radialen Dichtring ein gehäusefester Ventilkörper vorzusehen sind.


**Claims**

1.  Dual-circuit-controlled brake pressure control valve device for pressure-medium-actuated vehicle braking systems, especially a trailer control valve, having the following features:

a) there is provided a first control piston (25) having a first pressure-force-producing working face (27) and a second pressure-force-producing working face (23), the pressure force produced by the first working face (27) being oppositely directed to the pressure force produced by the second working face (23), and the first working face (27) bounding a first control chamber (26);

b) the first working face (27) is arranged to be subjected to a first control pressure (15) from a first brake circuit;

c) there is provided a second control piston (2) which is arranged to move relative to the first control piston (25) and which has a first pressure-force-producing working face (11) and a second pressure-force-producing working face (34, 36), the pressure force produced by the first working face (11) being oppositely directed to the pressure force produced by the second working face (34, 36);

d) the second control piston (2) is arranged to be brought into operative connection with the first control piston (25);

e) the first working face (11) of the second control piston (2) is of larger dimensions than the second working face (34, 36) of the second control piston (2);

f) the first working face (11) of the second control piston (2) is arranged to be subjected to the first control pressure of the first control chamber (26);

g) the second working face (34, 36) of the second control piston (2) bounds a second control chamber (33, 35), the second working face (34, 36) being arranged to be subjected to a second control pressure (7) from a second brake circuit;

h) for connecting a work chamber (14) as desired to, on the one hand, a pressure medium inlet chamber (38) or, on the other hand, a venting connection (18) there is provided a combined inlet and outlet valve (19, 20, 21);

i) the second working face (23) of the first control piston (25) is arranged to be subjected to the pressure in the work chamber (14);

k) the combined inlet and outlet valve (19, 20, 21) is arranged to be actuated by both control pistons (25 and/or 2);

**characterised by** the following features:

l) the second control chamber (33, 35) is in the form of a combination of a first part-chamber (33) and a second part-chamber (35), it being possible for the pressure in the first part-chamber (33), by means of a first partial working face (34), and the pressure in the second part-chamber (35), by means of a second partial working face (36), to act on the second control piston (2);

m) when the first control chamber (26) is subjected to pressure, only the first partial working face (34) acts on the second control piston (2).

2.  Brake pressure control valve device according to claim 1, **characterised in that** when the first control chamber (26) is subjected to pressure the second part-chamber (35) is pneumatically isolated from the second control pressure (7) from the second brake circuit.

3.  Brake pressure control valve device according to claim 2, **characterised in that** valve means are provided for the isolation of the second part-chamber (35) from the second control pressure (7).

4.  Brake pressure control valve device according to claim 3, **characterised in that** the valve means are in the form of radial control edge valve means.

5.  Brake pressure control valve device according to claim 4, **characterised in that** the radial control edge valve means are formed by firstly a lip-seal ring (41) fixed to the housing and secondly a cylindrical valve body (32) arranged in the second control piston (2).

6.  Brake pressure control valve device according to claim 5, **characterised in that** when the position of the second control piston (2) changes from its home position an actuation displacement is produced for the cylindrical valve body (32, 32').

7.  Brake pressure control valve device according to claim 6, **characterised in that** a cylindrical surface (43, 43', 43") of the cylindrical valve body (32, 32') forms a circular sealing line with the lip-seal ring (41, 41', 41").

8.  Brake pressure control valve device according to one of claims 5 to 7, **characterised in that** at least one air channel (42, 42') is provided in the cylindrical valve body (32, 32') as air guidance means.

9.  Brake pressure control valve device according to one of claims 8, **characterised in that** in the home position of the valve means, which is determined by the absence of pressure in the first control chamber (26), the second part-chamber (35) is connected to the second control pressure (7) from the second brake circuit by way of air guidance means (42, 42', 53, 53', 53").

10. Brake pressure control valve device according to claim 9, <u>**characterised in that**</u> the size of air cross-section freed at the air guidance means (42, 42', 53, 53', 53") by the circular sealing line is dependent on the actuation displacement.

11. Brake pressure control valve device according to one of claims 8 to 10, <u>**characterised in that**</u> the edges at the transition from the air guidance means (42, 42', 53, 53', 53") to the cylindrical surface (43, 43', 43") of the cylindrical valve body (32, 32') are radiused (51, 52).

12. Brake pressure control valve device according to claim 7, <u>**characterised in that**</u> a stepped bore (53) having a circumferential diameter enlargement is provided as air guidance means.

13. Brake pressure control valve device according to claim 4, <u>**characterised in that**</u> the radial control edge valve means are formed by firstly a lip-seal ring (41', 41") connected to the second control piston (2) and secondly a cylindrical valve body (32') fixed to the housing.

14. Brake pressure control valve device according to one of claims 5 to 7 or 13, <u>**characterised in that**</u> a stepped bore (53, 53', 53") having a circumferential diameter enlargement is provided as air guidance means.

15. Brake pressure control valve device according to claim 3, <u>**characterised in that**</u> the valve means are in the form of axially acting valve means (54, 56; 55, 57).

16. Brake pressure control valve device according to claim 15, <u>**characterised in that**</u> an elastomeric sealing element (54) fixed to the housing and a valve seat (56) arranged in the second control piston (2) are provided as valve means.

17. Brake pressure control valve device according to claim 16, <u>**characterised in that**</u> a valve seat (57) fixed to the housing and an elastomeric sealing element (55) arranged in the second control piston (2) are provided as valve means.

18. Brake pressure control valve device according to claim 4, <u>**characterised in that**</u> the valve means are made up of, on the one hand, a radial sealing ring and, on the other hand, a cylindrical valve body having air guidance means provided on its internal or external cylindrical surface, the radial sealing ring being slidably mounted on the valve body and forming a circular sealing line with the latter.

19. Brake pressure control valve device according to claim 18, <u>**characterised in that**</u> in the case of an actuation displacement of the valve body with respect to the radial sealing ring an air cross-section dependent on the actuation displacement is freed at the air guidance means.

20. Brake pressure control valve device according to claim 18 or 19, <u>**characterised in that**</u> both the radial sealing ring and the valve body can be arranged fixed to the piston, on the second control piston (2), or fixed to the housing, on the upper part (1) of the housing, a valve body that is fixed to the piston having to be provided in the case of a radial sealing ring that is fixed to the housing, and a valve body that is fixed to the housing having to be provided in the case of a radial sealing ring that is fixed to the piston.

**Revendications**

1. Système à valve de commande de pression de freinage avec pilotage à deux circuits, destiné à des installations de freinage de véhicule actionnées par fluide sous pression, en particulier valve de commande de remorque, présentant les éléments suivants :

    a) il est prévu un premier piston de commande (25) qui présente une première surface active (27) génératrice d'une force de pression et une seconde surface active (23) génératrice d'une force de pression, la force de pression générée par la première surface active (27) étant opposée à la force de pression générée par la seconde surface active (23) et la première surface active (27) délimitant une première chambre de commande (26) ;
    b) la première surface active (27) est susceptible d'être sollicitée par une première pression de commande (15) à partir d'un premier circuit de freinage ;

c) il est prévu un second piston de commande (2) mobile par rapport au premier piston de commande (25), qui présente une première surface active (11) génératrice d'une force de pression et une seconde surface active (34, 36) génératrice d'une force de pression, la force de pression générée par la première surface active (11) étant opposée à la force de pression générée par la seconde surface active (34, 36) ;

d) le second piston de commande (2) est susceptible d'être amené en liaison d'action avec le premier piston de commande (25) ;

e) la première surface active (11) du second piston de commande (2) est dimensionnée plus grande que la seconde surface active (34, 36) du second piston de commande (2) ;

f) la première surface active (11) du second piston de commande (2) est susceptible d'être sollicitée par la première pression de commande de la première chambre de commande (26) ;

g) le second piston de commande (2) délimite de par sa seconde surface active (34, 36) une seconde chambre de commande (33, 35), la seconde surface active (34, 36) étant susceptible d'être sollicitée par une seconde pression de commande (7) à partir d'un second circuit de freinage ;

h) pour la liaison sélective d'une chambre de travail (14) à une chambre d'entrée de fluide sous pression (38) d'une part ou à un raccord de purge (18) d'autre part, il est prévu une valve combinée d'entrée et de sortie (19, 20, 21) ;

i) la seconde surface active (23) du premier piston de commande (25) est susceptible d'être sollicitée par la pression dans la chambre de travail (14) ;

k) la valve combinée d'entrée et de sortie (19, 20, 21) est susceptible d'être actionnée par les deux pistons de commande (25 ou 2) ;

**caractérisé par** les éléments suivants :

l) la seconde chambre de commande (33, 35) est réalisée sous forme de combinaison d'une première chambre partielle (33) et d'une seconde chambre partielle (35), la pression dans la première chambre partielle (33) pouvant agir sur le second piston de commande (2) via une première surface active partielle (34), et la pression dans la seconde chambre partielle (35) pouvant agir sur le second piston de commande (2) via une seconde surface active partielle (36) ;

m) lors d'une sollicitation en pression de la première chambre de commande (26), seule la première surface active partielle (34) sur le second piston de commande (2) est active.

2. Système à valve de commande de pression de freinage selon la revendication 1, **caractérisé en ce que** lors d'une sollicitation en pression de la première chambre de commande (26), la seconde chambre partielle (35) est isolée sur le plan pneumatique de la seconde pression de commande (7) à partir du second circuit de freinage.

3. Système à valve de commande de pression de freinage selon la revendication 2, **caractérisé en ce que** pour isoler la seconde chambre partielle (35) de la seconde pression de commande (7), il est prévu des moyens formant valve.

4. Système à valve de commande de pression de freinage selon la revendication 3, **caractérisé en ce que** les moyens formant valve sont réalisés sous forme de moyens formant valve radiaux à arête de commande.

5. Système à valve de commande de pression de freinage selon la revendication 4, **caractérisé en ce que** les moyens formant valve radiaux à arête de commande sont constitués premièrement par une bague à gorge (41) solidaire du boîtier et deuxièmement par un corps de valve cylindrique (32) agencé dans le second piston de commande (2).

6. Système à valve de commande de pression de freinage selon la revendication 5, **caractérisé en ce que** lors d'une modification de la position du second piston de commande (2) hors de sa position de base, une course d'actionnement est générée pour le corps de valve cylindrique (32, 32').

7. Système à valve de commande de pression de freinage selon la revendication 6, **caractérisé en ce qu'**une surface cylindrique (43, 43', 43") du corps de valve cylindrique (32, 32') forme une ligne d'étanchéité circulaire avec la bague à gorge (41, 41', 41").

8. Système à valve de commande de pression de freinage selon l'une des revendications 5 à 7, **caractérisé en ce qu'**il est prévu à titre de moyens de guidage d'air dans le corps de valve cylindrique (32, 32') au moins un canal à air (42, 42').

**9.** Système à valve de commande de pression de freinage selon la revendication 8, **caractérisé en ce que** dans la position de base des moyens formant valve déterminée par l'absence de pression dans la première chambre de commande (26), la seconde chambre partielle (35) est reliée à la seconde pression de commande (7) à partir du second circuit de freinage via des moyens de guidage d'air (42, 42', 53, 53', 53").

**10.** Système à valve de commande de pression de freinage selon la revendication 9, **caractérisé en ce que** la taille d'une section transversale d'air dégagée par la ligne d'étanchéité circulaire au niveau des moyens de guidage d'air (42, 42', 53, 53', 53") dépend de la course d'actionnement.

**11.** Système à valve de commande de pression de freinage selon l'une des revendications 8 à 10, **caractérisé en ce que** les arêtes à la transition des moyens de guidage d'air (42, 42', 53, 53', 53") vers la surface cylindrique (43, 43', 43") du corps de valve cylindrique (32, 32') sont pourvues d'un rayon (51, 52).

**12.** Système à valve de commande de pression de freinage selon la revendication 7, **caractérisé en ce qu'**il est prévu à titre de moyens de guidage d'air un perçage en gradins (53) présentant un agrandissement de diamètre périphérique.

**13.** Système à valve de commande de pression de freinage selon la revendication 4, **caractérisé en ce que** les moyens formant valve radiaux à arête de commande sont constitués premièrement par une bague à gorge (41', 41") reliée au second piston de commande (2) et deuxièmement par un corps de valve cylindrique (32') solidaire du boîtier.

**14.** Système à valve de commande de pression de freinage selon l'une des revendications 5 à 7 ou 13, **caractérisé en ce qu'**il est prévu à titre de moyens de guidage d'air un perçage en gradins (53, 53', 53") présentant un agrandissement de diamètre périphérique.

**15.** Système à valve de commande de pression de freinage selon la revendication 3, **caractérisé en ce que** les moyens formant valve sont réalisés sous forme de moyens de valve (54, 56 ; 55, 57) agissant axialement.

**16.** Système à valve de commande de pression de freinage selon la revendication 15, **caractérisé en ce qu'**il est prévu à titre de moyens formant valve un élément d'étanchéité élastomère (54) solidaire du boîtier et un siège de valve (56) agencé dans le second piston de commande (2).

**17.** Système à valve de commande de pression de freinage selon la revendication 16, **caractérisé en ce qu'**il est prévu à titre de moyens formant valve un siège de valve (57) solidaire du boîtier et un élément d'étanchéité élastomère (55) agencé dans le second piston de commande (2).

**18.** Système à valve de commande de pression de freinage selon la revendication 4, **caractérisé en ce que** les moyens formant valve sont conçus d'une part à partir d'une bague d'étanchéité radiale et d'autre part par un corps de valve cylindrique muni de moyens de guidage d'air intégrés sur sa surface cylindrique intérieure ou sur sa surface cylindrique extérieure, la bague d'étanchéité radiale étant montée en coulissement sur le corps de valve et formant avec celui-ci une ligne d'étanchéité circulaire.

**19.** Système à valve de commande de pression de freinage selon la revendication 18, **caractérisé en ce que** lors d'une course d'actionnement du corps de valve par rapport à la bague d'étanchéité radiale sur les moyens de guidage d'air, une section transversale d'air dépendante de la course d'actionnement est libérée.

**20.** Système à valve de commande de pression de freinage selon la revendication 18 ou 19, **caractérisé en ce que** aussi bien la bague d'étanchéité radiale que le corps de valve sont susceptible d'être agencés solidairement du piston sur le second piston de commande (2) ou solidairement du boîtier sur la partie supérieure de boîtier (1), et lorsque la bague d'étanchéité radiale est solidaire du boîtier, il faut prévoir un corps de valve solidaire du piston, et lorsque la bague d'étanchéité radiale est solidaire du piston, il faut prévoir un corps de valve solidaire du boîtier.

Fig. 1

Fig. 2

Fig. 3

**Fig. 4**

Fig. 5a

Fig. 5c

Fig. 5b

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0312718 B1